(19) Europäisches Patentamt
European Patent Office
Office européen des brevets

(11) EP 4 068 859 A1

(12) EUROPEAN PATENT APPLICATION
published in accordance with Art. 153(4) EPC

(43) Date of publication:
05.10.2022 Bulletin 2022/40

(51) International Patent Classification (IPC):
H04W 48/04 (2009.01)    H04W 48/20 (2009.01)

(21) Application number: 19958525.8

(52) Cooperative Patent Classification (CPC):
H04W 48/04; H04W 48/20

(22) Date of filing: 31.12.2019

(86) International application number:
PCT/CN2019/130552

(87) International publication number:
WO 2021/134496 (08.07.2021 Gazette 2021/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129, (CN)

(72) Inventors:
• PENG, Wenjie
  Shenzhen, Guangdong 518129 (CN)
• DAI, Mingzeng
  Shenzhen, Guangdong 518129 (CN)
• WANG, Rui
  Shenzhen, Guangdong 518129 (CN)
• YAN, Le
  Shenzhen, Guangdong 518129 (CN)

(74) Representative: Pfenning, Meinig & Partner mbB
Patent- und Rechtsanwälte
Theresienhöhe 11a
80339 München (DE)

(54) COMMUNICATION METHOD AND APPARATUS

(57) This application provides a communication method and an apparatus. The method may include: A terminal device determines height information, where a first parameter is related to the height information. The terminal device receives configuration information from a first network device, where the configuration information includes a correspondence between the height information and the first parameter. The terminal device determines, based on the height information, the first parameter corresponding to the terminal device. The first parameter includes one or more of a tracking area parameter, a radio access network notification area parameter, a cell selection or reselection parameter, and a measurement configuration parameter. According to the foregoing method, configuration information corresponding to a height of an uncrewed aerial vehicle is provided, to ensure that an uncrewed aerial vehicle terminal device at a high height can obtain an effective configuration parameter, so that user experience at different heights is improved.

FIG. 3

EP 4 068 859 A1

**Description**

**TECHNICAL FIELD**

This application relates to the field of communication technologies, and in particular, to a communication method and an apparatus.

**BACKGROUND**

In a wireless communication network, a clear cell topology structure can be determined on a ground through network planning, an automatic neighbor relation (automatic neighbor relation, ANR), minimization of drive tests (minimization of drive tests, MDT), and the like. The neighbor relation is mostly maintained based on perception of a terrestrial user terminal.

Application of an uncrewed aerial vehicle (unmanned aerial vehicle, UAV) is increasingly popular in today's society. Communication environment of the uncrewed aerial vehicle is different from that of a common terminal to some extent. It is generally considered that the uncrewed aerial vehicle moves above the ground, and different types of uncrewed aerial vehicles have different flight heights. Under same network deployment, how to ensure that a UAV at a high height can obtain effective configuration information becomes an urgent problem to be resolved.

**SUMMARY**

Embodiments of this application provide a communication method and an apparatus, to resolve a problem that configuration information obtained by a terminal device (for example, an uncrewed aerial vehicle terminal device) at a high height is not adaptive.

According to a first aspect, an embodiment of this application provides a communication method, where the method may be performed by a terminal device, or may be performed by a component (for example, a processor, a chip, or a chip system) of the terminal device, and includes: receiving configuration information sent by a first network device, where the configuration information includes a correspondence between height information and a first parameter; and determining a target parameter based on a current height of the terminal device, where the first parameter includes one or more of a tracking area parameter, a radio access network notification area parameter, a cell selection or reselection parameter, and a measurement configuration parameter.

Optionally, the determining a target parameter based on a current height of the terminal device includes: determining the target parameter based on the height information and the configuration information.

According to the foregoing method, the terminal device can determine the target parameter based on the height information. In other words, the terminal device obtains, based on the height information, the target parameter corresponding to the height information, so that user experience is improved. For example, the terminal device at different heights performs cell selection or reselection by using different cell selection or reselection parameters, and this improves cell reselection reliability.

In some possible implementations, the correspondence may be a table. Optionally, the correspondence between the height information of the terminal device and the first parameter may be a function. In other words, the first network device configures, for the terminal device by sending the correspondence, one or more first parameters corresponding to the height information.

According to the foregoing implementations, the terminal device can obtain the correspondence between the height information of the terminal device and the first parameter in a plurality of possible implementations.

In some possible implementations, a height threshold may be received by using the configuration information, so that the height information may be determined based on the current height of the terminal device and the height threshold.

Optionally, the height information may be a height range, or the height information may be a height level, or the height information may be an absolute height or a relative height.

According to the foregoing implementations, the terminal device can determine the height information based on the current height, or determine the height information based on the current height and the height threshold.

In some possible implementations, measurement information may alternatively be sent to the first network device, where the measurement information includes identification information of a cell and a height corresponding to the cell, so that the first network device can update the neighbor relation based on the reported measurement information that carries the height information.

In some possible implementations, the measurement information sent by the terminal device may be information obtained through event measurement, or may be information obtained through periodic measurement.

Optionally, the terminal device may obtain the measurement information at an interval of a specific height.

According to the foregoing implementations, the terminal device sends, to the first network device, the measurement information that carries the height information, and this helps the first network device complete the neighbor relation.

According to a second aspect, an embodiment of this application provides a communication method, where the method may be performed by a first network device, or may be performed by a component (for example, a processor, a chip, or a chip system) of the first network device, and includes: determining a correspondence between a first parameter and height information; and sending configuration information to a terminal device, where the configuration information includes the correspondence between the first parameter and the height information, and the first parameter includes one or more of a tracking area parameter, a radio access network notification area parameter, a cell selection or reselection parameter, and a measurement configuration parameter.

According to the foregoing method, the first network device configures at least one set of first parameters that have a correspondence with height information for the terminal device, so that user experience at different heights can be improved.

In some possible implementations, the height information includes one of a height range, a height level, an absolute height, and a relative height. In some possible implementations, the configuration information includes a height threshold, where the height threshold is related to the height information.

Optionally, the terminal device determines the height information based on the height threshold and a current height of the terminal device.

According to the foregoing implementations, the first network device sends the height threshold to the terminal device, so that the terminal device determines the height information, and this helps the terminal device obtain a target parameter corresponding to the height information.

In some possible implementations, the method in the second aspect may alternatively include: receiving measurement information from the terminal device, where the measurement information includes identification information of a cell and a height corresponding to the cell.

According to the foregoing implementations, the first network device may update a neighbor relation based on the identification information of the cell and the height corresponding to the cell that are carried in the measurement information.

According to a third aspect, an embodiment of this application provides a communication method. The method may be performed by a first network device, or may be performed by a component (for example, a processor, a chip, or a chip system) of the first network device, and includes: receiving first information from a second network device, where the first information includes neighboring cell information of the second network device and height information corresponding to the neighboring cell information. The first network device maintains the neighboring cell information based on the first information, where the neighboring cell information includes a neighboring cell identifier or a neighboring cell list.

In some possible implementations, the first network device stores the first information. Optionally, the first network device updates or maintains the neighboring cell information based on the first information.

Optionally, the neighboring cell information of the second network device further includes one or more of a tracking area parameter or a radio access network notification area parameter.

According to the foregoing implementations, the first network device may update a neighbor relation, tracking area information, and radio access network notification area information based on height information that is of a neighboring cell and that is exchanged by the second network device.

In some possible implementations, the method in the third aspect may alternatively include a step of sending second information to the second network device, where the second information includes neighboring cell information of the first network device and height information corresponding to the neighboring cell information.

Optionally, the neighboring cell information of the first network device further includes one or more of a tracking area parameter or a radio access network notification area parameter.

According to the foregoing implementation, the second network device may update a neighbor relation based on height information that is of a neighboring cell and that is exchanged by the first network device, complete a neighboring cell topology relation, and update the tracking area information and the radio access network notification area information.

According to a fourth aspect, an embodiment of this application provides a communication method. The method may be performed by a second network device, or may be performed by a component (for example, a processor, a chip, or a chip system) of the second network device, and includes: The second network device maintains neighboring cell information based on height information, where the neighboring cell information includes a neighboring cell identifier or a neighboring cell list; and sends first information to a first network device, where the first information includes the neighboring cell information of the second network device and height information corresponding to the neighboring cell information.

According to the foregoing implementation, the second network device sends, to the first network device, the neighboring cell information corresponding to the height information, and the first network device may update a neighbor relation based on height information that is of a neighboring cell and that is exchanged by the second network device.

In some possible implementations, the method in the fourth aspect may alternatively include a step of receiving second information from the first network device, where the second information includes neighboring cell information of the first network device and height information corresponding to the neighboring cell information.

According to a fifth aspect, an embodiment of this application provides a communication apparatus, to implement the method in any one of the first aspect or the possible implementations of the first aspect. The apparatus includes a corresponding unit or component configured to perform the foregoing method. The unit included in the apparatus may be implemented by using software and/or hardware. The apparatus may be, for example, a terminal device, or a chip, a chip system, or a processor that can support the terminal device in implementing the foregoing method.

According to a sixth aspect, an embodiment of this application provides a communication apparatus, to implement the method in any one of the second aspect or the possible implementations of the second aspect, or any one of the third aspect or the possible implementations of the third aspect. The apparatus includes a corresponding unit or component configured to perform the foregoing method. The unit included in the apparatus may be implemented by using software and/or hardware. The apparatus may be, for example, a first network device, or a chip, a chip system, or a processor that can support the first network device in implementing the foregoing method.

According to a seventh aspect, an embodiment of this application provides a communication apparatus, to implement the method in any one of the fourth aspect or the possible implementations of the fourth aspect. The apparatus includes a corresponding unit or component configured to perform the foregoing method. The unit included in the apparatus may be implemented by using software and/or hardware. The apparatus may be, for example, a second network device, or a chip, a chip system, or a processor that can support the second network device in implementing the foregoing method.

According to an eighth aspect, an embodiment of this application provides a communication apparatus, including a processor, where the processor is coupled to a memory, the memory is configured to store a program or instructions, and when the program or the instructions are executed by the processor, the apparatus is enabled to implement the method in any one of the first aspect or the possible implementations of the first aspect.

According to a ninth aspect, an embodiment of this application provides a communication apparatus, including a processor, where the processor is coupled to a memory, the memory is configured to store a program or instructions, and when the program or the instructions are executed by the processor, the apparatus is enabled to implement the method in any one of the second aspect or the possible implementations of the second aspect, or the method in any one of the third aspect or the possible implementations of the third aspect.

According to a tenth aspect, an embodiment of this application provides a communication apparatus, including a processor, where the processor is coupled to a memory, the memory is configured to store a program or instructions, and when the program or the instructions are executed by the processor, the apparatus is enabled to implement the method in any one of the fourth aspect or the possible implementations of the fourth aspect.

According to an eleventh aspect, an embodiment of this application provides a computer-readable storage medium, where the computer-readable storage medium stores a computer program or instructions, and when the computer program or the instructions are executed, a computer is enabled to perform the method in any one of the first aspect, the second aspect, the third aspect, the fourth aspect, or the possible implementations of the first aspect, the second aspect, the third aspect, or the fourth aspect.

According to a twelfth aspect, an embodiment of this application provides a computer program product, where the computer program product includes computer program code, and when the computer program code is run on a computer, the computer is enabled to perform the method in any one of the first aspect, the second aspect, the third aspect, the fourth aspect, or the possible implementations of the first aspect, the second aspect, the third aspect, or the fourth aspect.

According to a thirteenth aspect, an embodiment of this application provides a chip, including a processor, where the processor is coupled to a memory, the memory is configured to store a program or instructions, and when the program or the instructions are executed by the processor, the chip is enabled to implement the method in any one of the first aspect, the second aspect, the third aspect, the fourth aspect, or the possible implementations of the first aspect, the second aspect, the third aspect, or the fourth aspect.

According to a fourteenth aspect, an embodiment of this application provides a communication system, including the apparatus according to the fifth aspect, the apparatus according to the sixth aspect, and the apparatus according to the seventh aspect.

**BRIEF DESCRIPTION OF DRAWINGS**

FIG. 1 is a schematic diagram of a communication system to which an embodiment of this application may be applied;

FIG. 1A is a schematic diagram of coverage of cells at different heights according to an embodiment of this application;
FIG. 2 is a schematic diagram of an example of an architecture of a communication system according to an embodiment of this application;
FIG. 3 is a schematic interaction diagram of a communication method according to an embodiment of this application;
FIG. 4 is a schematic interaction diagram of a communication method according to an embodiment of this application;
FIG. 5 is a schematic diagram of a structure of a communication apparatus according to an embodiment of this application; and
FIG. 6 is a schematic diagram of another communication apparatus according to an embodiment of this application.

**DESCRIPTION OF EMBODIMENTS**

First, a communication system to which the technical solutions provided in embodiments of this application are applicable is described.

The technical solutions in embodiments of this application may be applied to various communication systems, for example, a long term evolution (long term evolution, LTE) system, a 5th generation (5th generation, 5G) communication system, a wireless-fidelity (wireless-fidelity, Wi-Fi) system, a new radio (new radio, NR) system, a system integrating a plurality of communication systems, or a future evolved communication system, and another network system that can be used to provide a communication service. This is not limited herein.

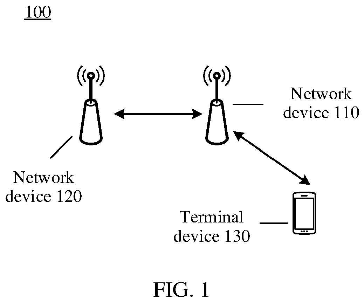

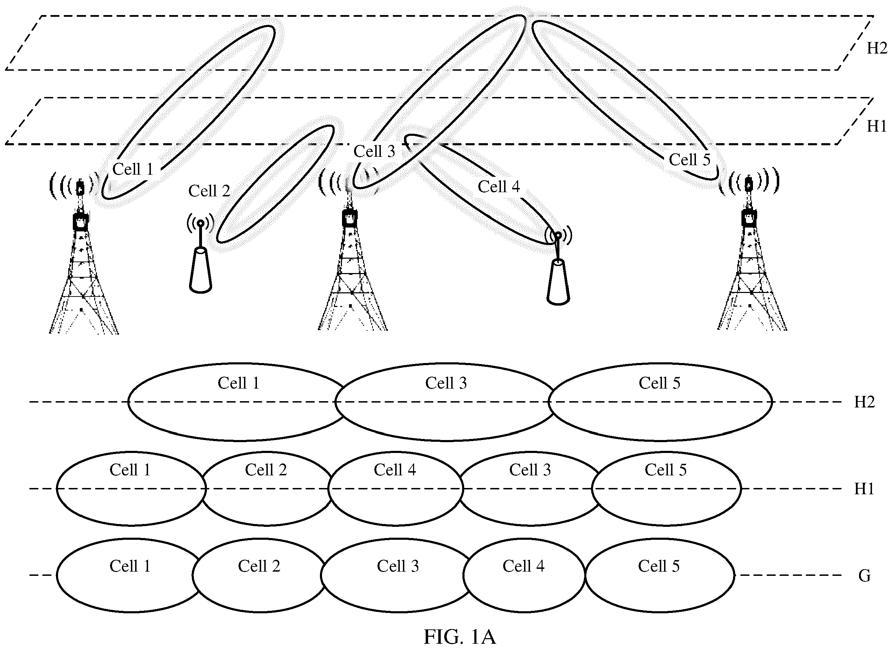

FIG. 1 is an example of a schematic diagram of a communication system to which an embodiment of this application may be applied. The communication system 100 includes one or more network devices (where a network device 110 and a network device 120 are shown in the figure), and one or more terminal devices that communicate with the one or more network devices. As shown in FIG. 1, the network device 110 communicates with the network device 120, and a terminal device 130 communicates with the network device 110. It may be understood that a network device and a terminal device may also be referred to as communication devices.

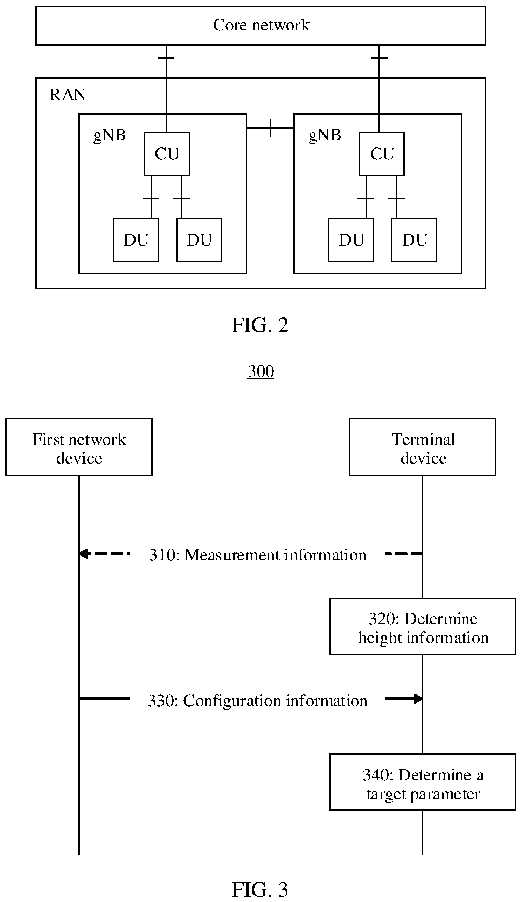

FIG. 2 is a schematic diagram of an example of an architecture of a communication system according to an embodiment of this application. As shown in FIG. 2, a network device in a radio access network (radio access network, RAN) is a base station (for example, a gNodeB or a gNB) in an architecture in which a centralized unit (centralized unit, CU) and a distributed unit (distributed unit, DU) are separated. The RAN may be connected to a core network (for example, may be an LTE core network or a 5G core network). It may be understood as that the base station is divided into the CU and the DU from the perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, may be an F1 interface.

Optionally, the CU and the DU may be obtained through division based on protocol layers of a wireless network. For example, functions of a radio resource control (Radio Resource Control, RRC) layer, a service data adaptation protocol (Service Data Adaptation Protocol, SDAP) layer, and a packet data convergence protocol (packet data convergence protocol, PDCP) layer are deployed on the CU, and functions of a radio link control (radio link control, RLC) layer, a media access control (Media Access Control, MAC) layer, a physical (physical, PHY) layer, and the like are deployed on the DU. It should be understood that division of processing functions of the CU and the DU based on the protocol layers is merely an example, and the division of the processing functions of the CU and the DU may alternatively be in another manner.

Optionally, the CU or the DU may alternatively have some processing functions of the protocol layers through division. In a possible design, some functions of the RLC layer and functions of a protocol layer above the RLC layer are deployed on the CU, and remaining functions of the RLC layer and functions of a protocol layer below the RLC layer are deployed on the DU. In another possible design, division of functions of the CU or the DU may be performed based on a service type or another system requirement. For example, division may be performed based on a latency. Functions whose processing time needs to meet a latency requirement are deployed on the DU, and functions whose processing time does not need to meet the latency requirement are deployed on the CU. A network architecture shown in FIG. 2 may be applied to a 5G communication system, and may alternatively share one or more components or resources with an LTE system. In another design, the CU may alternatively have one or more functions of a core network. One or more CUs may be disposed in a centralized manner or a separated manner. For example, the CUs may be disposed on a network side for ease of centralized management. The DU may have a plurality of radio frequency functions, or the radio frequency functions may be disposed remotely.

Optionally, functions of the CU may be implemented by one entity, or may be implemented by different entities. For example, the functions of the CU may be further divided. For example, a control plane (Control Plane, CP) is separated from a user plane (User Plane, UP), that is, a CU control plane (CU-CP) is separated from a CU user plane (CU-UP). For example, the CU-CP and the CU-UP may be implemented by different functional entities. The CU-CP and the CU-UP may be coupled to the DU to jointly implement functions of the base station. In a possible manner, the CU-CP is responsible for control plane functions, and mainly includes an RRC and a PDCP-C. The PDCP-C is mainly responsible for data encryption and decryption, integrity protection, serial number maintenance, data transmission, and the like on the control plane. The CU-UP is responsible for user plane functions, and mainly includes an SDAP and a PDCP-U. The SDAP is mainly responsible for processing data of the core network and mapping a data flow (flow) to a bearer. The PDCP-U is mainly responsible for encryption and decryption, integrity protection, header compression, serial number maintenance, data transmission, and the like on a data plane. The CU-CP and the CU-UP are connected through an E1 interface.

It may be understood that embodiments provided in this application are also applicable to an architecture in which the CU and the DU are not separated.

In this application, the network device may be any device having a wireless transceiver function. The network device includes but is not limited to: an evolved NodeB (NodeB or eNB or e-NodeB, evolutional NodeB) in LTE, a base station (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, or the like. The base station may be a macro base station, a micro base station, a picocell base station, a small cell, a relay station, a balloon station, or the like. A plurality of base stations may support the aforementioned networks of a same technology, or may support the aforementioned networks of different technologies. The base station may include one or more co-site or non-co-site TRPs. The network device may alternatively be a radio controller, a CU, and/or a DU in a cloud radio access network (cloud radio access network, CRAN) scenario. The network device may alternatively be a server, a wearable device, a vehicle-mounted device, or the like. An example in which the network device is a base station is used for description below. The plurality of network devices may be base stations of a same type or base stations of different types. The base station may communicate with a terminal device, or may communicate with the terminal device through a relay station. The terminal device may communicate with a plurality of base stations using different technologies. For example, the terminal device may communicate with a base station supporting an LTE network, may communicate with a base station supporting a 5G network, and may further support dual connectivity to a base station in an LTE network and a base station in a 5G network. The network device in embodiments of this application may also be referred to as an access network device.

The terminal device may be user equipment (user equipment, UE), an access terminal, a subscriber unit, a subscriber station, a mobile station, a mobile console, a remote station, a remote terminal, a mobile device, a user terminal, a terminal, a wireless terminal device, a user agent, or a user apparatus. The terminal may alternatively be a cellular phone, a cordless phone, a wireless local loop (wireless local loop, WLL) station, a personal digital assistant (personal digital assistant, PDA) device, a handheld device having a wireless communication function, a computing device, another processing device connected to a wireless modem, a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, a terminal device in a future 5G network, a terminal device in a future evolved PLMN, or the like. Alternatively, the terminal may be fixed or mobile, and the terminal may be deployed on land, in water, or in the air.

In addition, in embodiments of this application, the terminal device may alternatively be an uncrewed aerial vehicle (unmanned aerial vehicle, UAV). The uncrewed aerial vehicle in embodiments of this application may alternatively be a conventional uncrewed aerial vehicle, or may be an uncrewed aerial vehicle carrying a conventional ground terminal device (for example, the conventional terminal device is placed on an uncrewed aerial vehicle). The ground terminal device may also be referred to as a common terminal device, a mobile ground terminal device, or the like. It may be understood that a location of the ground terminal device is close to a ground.

In the method provided in this application, that the network device configures, for the terminal device (for example, a UAV), a configuration parameter that has a correspondence with a height may be understood as that the network device sets different configuration parameters for the terminal device by using a height as a granularity. In other words, the network device may configure different configuration parameters for the terminal device at different heights. The terminal device may select, based on a correspondence between a height and a configuration parameter, a configuration parameter corresponding to the height of the terminal device, to improve user experience at different heights.

The height at which the terminal device is located may be a height relative to a ground, a height relative to a sea level, or a height relative to a reference point. In a possible embodiment, a height relative to a ground or a sea level may be referred to as an absolute height, and a height relative to a reference point may be referred to as a relative height.

The following describes the technical solutions of this application in detail by using specific embodiments with reference to the accompanying drawings. The following embodiments and implementations may be combined with each other, and same or similar concepts or processes may not be described repeatedly in some embodiments. It should be understood that a function explained in this application may be implemented by using an independent hardware circuit, software running in combination with a processor/microprocessor or a general-purpose computer, an application-specific integrated circuit, and/or one or more digital signal processors. When described as a method, this application may alternatively be implemented in a computer processor and a memory coupled to the processor.

Cell topologies of the terminal device at different heights are different, to be specific, neighboring cells corresponding to a cell at different heights are different. In addition, cell coverage of the cell at different heights may also be different. As shown in FIG. 1A, G in the figure represents a ground, H1 and H2 are height information and used to identify high heights, and H2>H1. Cell 3 in FIG. 1A is used as an example. Neighboring cells of cell 3 on the ground are cell 2 and cell 4. Neighboring cells of cell 3 at a height of H1 are cell 4 and cell 5. Neighboring cells of cell 3 at a height of H2 are cell 1 and cell 5. That is, cell 3 corresponds to different neighboring cells at different heights. On the other hand, although cell 3 is adjacent to cell 5 at both H1 and H2, coverage of cell 3 at the height of H1 is different from that of cell 5 at the height of H2, that is, coverage of a same cell is different at different heights.

For ease of understanding of embodiments of this application, some concepts or terms used in this application are first briefly described.

1. Cell reselection: After a terminal device camps on a cell, as the terminal device moves, the terminal device may hand over to another suitable cell for camping. The another suitable cell is, for example, another cell with a higher priority or a better signal. This is a cell reselection process.

For example, parameters related to cell reselection include:

a. cellSelectionInfo in a system information block type 1 (system information block type 1, SIB1), that is, a parameter related to cell selection of a current serving cell, including at least one of the following: q-RxLevMin, q-RxLevMinOffset, q-RxLevMiSUL, q-QualMin, and q-QualMinOffset.
b. cellReselectionInfoCommon, cellReselectionServingFreqInfo, and intraFreqCellReselectionInfo in a system information block type 2 (system information block type 2, SIB2).

cellReselectionInfoCommon is common information of intra-frequency/inter-frequency/inter-RAT cell reselection, and may include, for example, one or more of the following parameters: q-Hyst and speedStateReselectionPars.
cellReselectionServingFreqInfo is common information of a non-intra-frequency cell, that is, common information used for inter-frequency/inter-RAT cell reselection, and may include, for example, at least one of the following parameters: a cell reselection priority, a cell reselection sub-priority, s-NonIntraSearchP, s-NonIntraSearchQ, threshServingLowP, and threshServingLowQ.
intraFreqCellReselectionInfo is information about intra-frequency cell reselection, and may include, for example, at least one of the following parameters: q-RxLevMin, q-RxLevMiSUL, q-QualMin, s-IntraSearchP, s-IntraSearchQ, and t-ReselectionNR.

c. intraFreqNeighCellList and intraFreqBlackCellList in a system information block type 3 (system information block type 3, SIB3).

intraFreqNeighCellList is an intra-frequency neighboring cell information list, and the list includes at least one piece of intra-frequency neighboring cell information, where the intra-frequency neighboring cell information includes a cell identifier and a parameter related to the cell reselection. intraFreqBlackCellList is a blacklist of intra-frequency neighboring cells.

d. interFreqCarrierFreqList in a system information block type 4 (system information block type 4, SIB4).
interFreqCarrierFreqList is information about inter-frequency cell reselection, and a specific parameter includes inter-frequency frequency information, corresponding frequency band information, and corresponding parameters related to the cell reselection.

Optionally, for descriptions of the foregoing parameters, further refer to the 3GPP standard protocol TS 38.304 v15.4.0. However, this is not limited in embodiments of this application.

2. Tracking area code (tracking area code, TAC): a serial number of a tracking area. The TAC is used to identify the tracking area. The TAC is not globally unique but uniquely identifies a same operator.

3. Tracking area identity (tracking area identity, TAI): including a public land mobile network identity (public land mobile network identity, PLMN ID) and the TAC. The TAI is used to identify the tracking area. The TAI is a globally unique identifier.

4. Radio access network notification area code (radio access network based notification area code, RNAC): a serial number of a radio access network notification area. A radio access network notification area identifier includes the PLMN ID, the TAC, and the RNAC. The radio access network notification area identifier is used to identify the radio access network notification area, and the radio access network notification area identifier is a globally unique identifier.

FIG. 3 is a schematic interaction diagram of a communication method 300 according to an embodiment of this application. FIG. 3 shows the communication method by using an example in which a first network device and a terminal device are execution bodies of an interaction example. However, the execution bodies of the interaction example are not limited in this application.

It may be understood that steps or procedures implemented by the first network device in FIG. 3 may alternatively be implemented by a chip, a chip system, a processor, or the like that supports the first network device in implementing the method. In FIG. 3, the steps or procedures implemented by the terminal device may alternatively be implemented by a chip, a chip system, a processor, or the like that supports the terminal device in implementing the method.

As shown in FIG. 3, the method 300 in this embodiment may include the following operations.

Operation 320: The terminal device determines height information.

In a possible implementation, the height information is a height range. In other words, the terminal device determines, based on a current height, a height range in which the terminal device is located.

In another possible implementation, the height information is a height level. In other words, the terminal device determines the height level based on a current height and a height threshold. It may be understood that the height threshold may be predefined, or may be sent by the network device. It is easy to understand that the height information may also be referred to as a height factor, a height parameter, or the like. This is not limited in this embodiment of this application.

In still another possible implementation, the height information is a height of the terminal device relative to the first network device.

Operation 330: The first network device sends configuration information to the terminal device, where the configuration information includes at least one piece of height information and a first parameter corresponding to the at least one piece of height information.

Correspondingly, the terminal device receives the configuration information sent by the first network device.

It is easy to understand that a sequence of determining the height information by the terminal device and receiving, by the terminal device, the configuration information sent by the first network device is not limited in this embodiment of this application. In other words, operations 320 and 330 may be simultaneously performed, or operation 320 is performed after operation 330.

The first parameter includes one or more of a tracking area parameter, a radio access network notification area parameter, a cell selection or reselection parameter, and a measurement configuration parameter.

In this embodiment of this application, a first parameter in the configuration information sent by the first network device and received by the terminal device may include one of the tracking area parameter, the radio access network notification area parameter, the cell selection or reselection parameter, and the measurement configuration parameter, or may be a combination of a plurality of parameters. It may be understood as that these parameters may be sent in one piece of configuration information, or may be respectively sent in a plurality of pieces of configuration information.

The tracking area parameter may be a tracking area identifier (TAI) or TAC, the radio access network notification area parameter may be a radio access network notification area identifier or RNAC, and the measurement configuration parameter may be a configuration parameter required by the terminal to perform measurement (for example, minimization of drive tests (minimization of drive tests, MDT)).

In this embodiment of this application, the first network device may configure corresponding first parameters for different height information, and send the first parameters to the terminal device. It may be understood that the first parameter corresponding to the height information may also be referred to as the first parameter related to the height information, that is, there is a correspondence between height information and a first parameter.

The first network device may send the configuration information to the terminal device in a plurality of different manners. In this embodiment of this application, the first parameter that has a correspondence with the height information may be understood as that the terminal device at different heights may select first parameters corresponding to the heights of the terminal device.

It may be understood that the correspondence between the first parameter and the height information may be implemented in a plurality of different manners. For example, the correspondence may be implemented in a form of a table, or may be implemented in a form of a function, or may be implemented by using another data structure, for example, may be implemented by using an array, a queue, a container, a stack, a linear table, a pointer, a linked list, a tree, a graph, a structure, a class, a heap, a hash table, or the like.

In a possible implementation, the correspondence between the first parameter and the height information of the terminal device is implemented in a form of a table. For example, the correspondence between the first parameter and the height information may be shown in Table 1.

**Table 1**

| First parameter list | Height |
|---|---|
| Parameter 1 | Less than or equal to $T_{hight1}$ |
| Parameter 2 | Greater than $T_{hight1}$ |

In Table 1, $T_{hight1}$ is a height threshold, and parameter 1 and parameter 2 are different first parameters. It may be understood that $T_{hight1}$ may be predefined, or may be configured by the first network device for the terminal device. For example, $T_{hight1}$ may be pre-stored in a corresponding apparatus (for example, a memory, a cache, a storage medium, or another apparatus that can be used to store data), and the terminal device reads $T_{hight1}$ from the apparatus to obtain $T_{hight1}$. "Predefine" in this application may be understood as "define", "predefine", "store", "pre-store", "pre-negotiate", "pre-configure", "solidify", or "pre-burn". Parameter 1 and parameter 2 may be configured by the first network device for the terminal device.

As shown in Table 1, the terminal device selects (or determines) a target parameter corresponding to a height of the terminal device from a plurality of sets of first parameters that are in a correspondence with height information. For example, when the height of the terminal device is less than or equal to the height threshold $T_{hight1}$, a target parameter selected by the terminal device is parameter 1; or when the height of the terminal device is greater than $T_{hight1}$, a target parameter selected by the terminal device is parameter 2. A specific value of the height threshold is not limited in this embodiment of this application. For example, the height threshold may be 50 m.

In still another possible manner, the height information may be fixed, and the height information may be determined by the first network device, or may be determined by a network management system. In an implementation of this application, it may be understood as that the configuration information in operation 330 may not carry the height information, a plurality of sets of parameters in the configuration information correspond to the height information in an order, and the plurality of sets of parameters may be arranged in descending order of the height information, or may be arranged in ascending order of the height information. The terminal device may select, from the configuration information, a target parameter corresponding to an order of the height information of the terminal device.

In another possible implementation, a plurality of height thresholds may be configured. To be specific, N thresholds are introduced, where N is greater than or equal to 2. Correspondingly, space is divided into N+1 parts in terms of height, and there may be N+1 sets of corresponding first parameters. Parameter 1 to parameter N+1 may be configured by the first network device for the terminal device.

For example, the correspondence between N+1 sets of first parameters and height information may be shown in Table 3.

**Table 3**

| First parameter | Corresponding Height |
|---|---|
| Parameter 1 | Less than $T_{hight1}$ |
| Parameter 2 | Greater than $T_{hight1}$, less than or equal to $T_{hight2}$ |
| ... | ... |
| Parameter N | Greater than $T_{hightN-1}$, less than or equal to $T_{hightN}$ |
| Parameter N+1 | Greater than $T_{hightN}$ |

As shown in Table 3, when the height of the terminal device is greater than $T_{hight1}$ and less than or equal to $T_{hight2}$, a target parameter selected by the terminal device from received N+1 sets of parameters is parameter 2; when the height of the terminal device is greater than $T_{hightN-1}$ and less than or equal to $T_{hightN}$, a target parameter selected by the terminal device from received N+1 sets of parameters is parameter N; or when the height of the terminal device is greater than $T_{hightN}$, a target parameter selected by the terminal device from received N+1 sets of parameters is parameter N+1. It may be understood that height thresholds $T_{hight1}$, $T_{hight2}$, $T_{hight3}$, ..., $T_{hightN}$ may be predefined, or may be configured by the first network device for the terminal device, where $T_{hight1} < T_{hight2} < T_{hight3} < ... < T_{hightN}$. Differences between adjacent height thresholds may be the same or may be different.

It may be understood that each item in the height threshold column in Table 3 may alternatively be sorted in descending order. In other words, the height thresholds may alternatively be sorted in descending order. This is not limited in this embodiment of this application.

For example, introducing two height thresholds is used as an example. $T_{hight1}$=50 and $T_{hight2}$=150 may be introduced. A unit of the height threshold may be meter (m), kilometer, or the like. In this embodiment of this application, an example in which the unit of the height threshold is meter is used. The correspondence between the first parameter and the height information may be shown in Table 4.

**Table 4**

| First parameter | Height |
|---|---|
| Parameter 1 | Less than 50 m |
| Parameter 2 | Greater than 50 m and less than or equal to 150 m |
| Parameter 3 | Greater than 150 m |

As shown in Table 4, two thresholds are introduced in Table 4. Correspondingly, space is divided into three parts in terms of height, and there may be three sets of corresponding first parameters. To be specific, when the height of the terminal device is less than or equal to 50 m, a target parameter selected by the terminal device is parameter 1, and the parameter 1 may be understood as a parameter corresponding to a low-height or ground terminal device; when the height of the terminal device is greater than 50 m and less than or equal to 150 m, a target parameter selected by the terminal device is parameter 2; or when the height of the terminal device is greater than 150 m, a target parameter selected by the terminal device is parameter 3.

In still another possible implementation, the terminal device determines the height information (height level). In other words, the height information is a form of the height level, and the terminal device determines, based on a correspondence between a height level and a first parameter, the first parameter corresponding to the current height of the terminal device. A plurality of height levels may be configured. For example, N levels are introduced, where N is greater than or equal to 2. Correspondingly, space is divided into N parts in terms of height, and there may be N sets of corresponding first parameters. Parameter 1 to parameter N may be configured by the first network device for the terminal device.

For example, a correspondence between N sets of first parameters and height information may be shown in Table 5.

**Table 5**

| Height Level | First parameter |
|---|---|
| First level | Parameter 1 |
| Second level | Parameter 2 |
| ... | ... |
| N$^{th}$ level | Parameter N |

It may be understood that there may be a plurality of implementations for division of height levels. Optionally, the division of height levels is predefined. Optionally, the height level is determined by a first network device. In other words, the first network device configures the height level for the terminal device, or the first network device indicates a rule of the height level to the terminal device. It is similar to the height threshold described above that, the first network device may indicate the height level by sending the height threshold to the terminal device. For example, the height threshold $T_{hight1}$ is sent. A current height of the terminal device less than $T_{hight1}$ is a first level; and a current height of the terminal device greater than $T_{hight1}$ is a second level. Optionally, the first network device may send a plurality of height thresholds. In other words, the terminal device may have a plurality of height levels, and different height levels correspond to different first parameters.

It is easy to understand that the height level may also be referred to as a height factor, a height rule, or a height measurement. This is not limited in this embodiment of this application.

In another possible implementation, the correspondence between the first parameter and the height information of the terminal device is implemented in a form of a function. For example, the first parameter is obtained by using a function $f(h)$, where h may be an absolute height of the terminal device, or may be a relative height difference between the terminal device and the first network device. For example, a possible implementation of the function $f(h)$ is:

$$f(h) = \begin{cases} \text{Parameter 1,} & h \leq T_{hight1} \\ \text{Parameter 2,} & T_{hight1} < h \leq T_{hight2} \\ & \cdots \\ \text{Parameter } N+1, & T_{hightN} < h \end{cases}$$

$T_{hight1}$, $T_{hight2}$, ..., and $T_{hightN}$ are height thresholds. The height thresholds may be predefined, or may be configured by the first network device for the terminal device.

It should be noted that another function or another implementation of the function that can implement the correspondence between the first parameter and the height information is not limited in this embodiment of this application.

Optionally, the configuration information may be carried in a broadcast message. It may be understood that the configuration information may alternatively be carried in another message, for example, an RRC reconfiguration message.

The terminal device determines, based on the height information, a target parameter used at the current height, in other words the terminal device determines the target parameter based on the height information and the correspondence between the height information and the first parameter. It may be understood that in this embodiment of this application, that the terminal device determines the target parameter may also be referred to as that the terminal device obtains the target parameter.

In operation 320, the terminal device determines the height information corresponding to the height of the terminal device based on the height threshold. Further, the terminal device obtains, based on the correspondence that is between the first parameter and the height information and that is received in operation 330, the target parameter corresponding to the height information of the terminal device, so that user experience at different heights can be improved.

For example, optionally, the first parameter may be a cell reselection/selection parameter. Optionally, there may be correspondences between all parameters in the cell reselection/selection parameter and the height information, or there may be correspondences between some parameters in the cell reselection/selection parameter and the height information.

After determining, from the first parameter in the configuration information, the cell reselection/selection parameter corresponding to the height information of the terminal device, the terminal device may perform cell reselection/selection based on the cell reselection/selection parameter.

According to the method 300 in this embodiment, for different heights, the first network device configures different cell selection/reselection parameters for the terminal device, so that different cell topologies are fully considered, thereby improving cell reselection reliability.

In a wireless communication network, for a terminal device in an idle mode, a network device provides a tracking area information (TAI) list or a TAC for the terminal device. The TAI includes a PLMN ID and the TAC. In this embodiment of this application, the first network device may configure a plurality of sets of tracking area parameters corresponding to different height information. In other words, the first network device configures, for the terminal device, a plurality of sets of tracking area identities corresponding to the height information. Optionally, in this embodiment of this application, the first parameter may be the tracking area parameter. After determining, in the first parameter, a tracking area parameter corresponding to the height information of the terminal device, when location information of the terminal device changes, the terminal device may determine, based on the tracking area parameter, whether to trigger a tracking area update.

According to the method 300 in this embodiment, for different heights, the first network device configures a plurality of sets of different tracking area parameters for the terminal device, to avoid a ping-pong problem caused by unmatching tracking area parameters when the terminal device moves, that is, the terminal device repeatedly moves in two tracking areas.

For a terminal device in an inactive (inactive) mode, the network device provides a radio access network notification area (RNA) identifier list or the RNAC for the terminal device. The RNA identifier list includes the PLMN ID, the TAC, and a RAN area code. After the terminal device receives the RNA identifier list or the RNAC, during subsequent movement, if an RNA of a reselected cell does not belong to the RNA list, a radio access network-based notification area update (radio access network-based notification area update, RNAU) may be triggered. Optionally, in this embodiment of this application, the first parameter may be the radio access network notification area parameter, and the radio access network notification area parameter includes a radio access network notification area identifier. After the terminal device determines, in the first parameter, a radio access network notification area parameter corresponding to the height information of the terminal device, when location information of the terminal device changes, the terminal device may determine, based on the radio access network notification area parameter, whether to trigger the radio access network notification area update.

According to the method 300 in this embodiment, for different heights, the first network device configures, for the terminal device, a plurality of sets of radio access network notification area parameters corresponding to different height information, so that the terminal device can be prevented from frequently triggering the radio access network notification area update at the different heights.

Optionally, in this embodiment of this application, the first parameter may be the measurement configuration parameter. According to the method 300 in this embodiment, for different heights, the first network device configures, for the terminal device, a plurality of sets of measurement configuration parameters corresponding to different height information. In other words, the terminal device may perform measurement based on the height information of the terminal device. In other words, the terminal device may measure different cells at the different heights.

Optionally, in this embodiment of this application, the measurement configuration parameter may include one or more of an MDT measurement configuration parameter and a quality of service (quality of service, QoS) measurement configuration parameter, or the measurement configuration parameter may alternatively include a configuration parameter used for measuring power.

For example, when the first parameter is the measurement configuration parameter, a possible implementation in this embodiment of this application is shown in Table 6. The terminal device receives the configuration information sent by the first network device. The configuration information includes the measurement configuration parameter, the height threshold, and a correspondence between a height threshold and a measurement configuration parameter.

**Table 6**

| Measurement configuration parameter | Corresponding Height |
|---|---|
| Measurement configuration parameter 1 | Less than $T_{hight1}$ |
| Measurement configuration parameter 2 | Greater than $T_{hight1}$, less than or equal to $T_{hight2}$ |
| Measurement configuration parameter 3 | Greater than $T_{hight2}$ |

As shown in Table 6, optionally, the measurement configuration parameter 1, the measurement configuration parameter 2, and the measurement configuration parameter 3 may be included in the configuration information sent by the first network device. The measurement configuration parameter 1 may be a measurement whitelist and/or a measurement blacklist, for example, a white cell list 1 (white cell list 1) and/or a black cell list 1 (black cell list 1). The white cell list 1 and/or the black cell list 1 may include an identifier of a cell, and identifier information of the cell may include one or more of a physical cell identifier (physical cell identifier, PCI), a frequency, or cell global identification (cell global identification, CGI). In other words, when the terminal device determines, based on the height information, to perform measurement based on the measurement configuration parameter 1, the terminal device may measure only a cell in the white cell list 1. It may also be understood as that when the target parameter corresponding to the height information of the terminal device is the measurement configuration parameter 1, the terminal device measures the cell in the white cell list 1 and does not measure a cell in the black cell list 1, to improve measurement efficiency of the terminal device. It may be understood that an implementation of the measurement configuration parameter 2 or 3 is similar to that of the measurement configuration parameter 1. Details are not described again in this application.

It is easy to understand that Table 6 is an example implementation of Table 3 described in the method 300. To be specific, Table 6 is an example of the correspondence between the first parameter and the height information in the method 300. Alternatively, an implementation in which the correspondence between the first parameter and the height information is a function may be used. This is not limited in this embodiment of this application.

According to the method provided in this embodiment of this application, the first network device sends at least one set of first parameters to the terminal device, where there is a correspondence between the first parameter and the height information; and the terminal device determines the height information based on the height of the terminal device, and further obtains the target parameter corresponding to the height information. In other words, the terminal device obtains, from the at least one set of first parameters that is related to the height information and that is sent by the first network device, the first parameter corresponding to the height of the terminal device, and uses the first parameter as the target parameter, so that user experience at different heights can be improved.

Optionally, the method 300 may further include an optional operation 310: The terminal device sends measurement information to the first network device, where the measurement information includes at least an identifier of a cell and a height corresponding to the cell, and the measurement information may further include measurement result information corresponding to the cell. The terminal device may measure one or more cells, and the cell includes a serving cell and/or a neighboring cell. One or more cells in the measurement information may be a cell that satisfies a preset criterion.

Optionally, the measurement information may be information obtained based on event measurement, or may be information obtained through periodic measurement.

Optionally, the terminal device may obtain the measurement information at an interval of a specific height. Optionally, the terminal device autonomously decides to perform measurement, or the terminal device performs measurement based on an indication of the network device.

In a possible manner, the first network device updates the neighboring cell information based on the measurement information in operation 310, that is, the first network device may maintain a neighbor relation based on the height information. Therefore, the first network device has neighbor relation information that is more accurate. Optionally, the first network device may determine, based on the maintained neighbor relation, the configuration information sent in operation 330. For example, the first network device may update, based on the measurement information that includes the height information in operation 310, the correspondence between the height information and the first parameter in the configuration information sent in operation 330, so that the terminal device may select a corresponding target parameter based on the correspondence.

For example, it is assumed that the measurement information that includes the height information and that is received by the first network device includes an identifier of a cell and a corresponding height. For example, cell 1 corresponds to a height level 1, and cell 2 corresponds to a height level 2. That the first network device updates, based on the configuration information, the neighbor relation is: adding cell 1 to a cell corresponding to the height level 1, and adding cell 2 to a cell corresponding to the height level 2.

Optionally, the terminal device may report the height information to the first network device when reporting the cell global identification to the first network device. Alternatively, the terminal device may report the height information to the first network device when reporting MDT information. It may be understood that a method for sending, by the terminal device, the measurement information including the height information is similar to a method for sending, by a second network device, the first information including the height information in the method 400. Therefore, reference may be further made to the following descriptions in the method 400. The first network device may update the neighboring cell information by using the measurement information that carries the height information and that is sent by the terminal device, so that the first network device can provide, for the terminal device at different heights, a configuration corresponding to the height information, and the first network device can update the neighboring cell information.

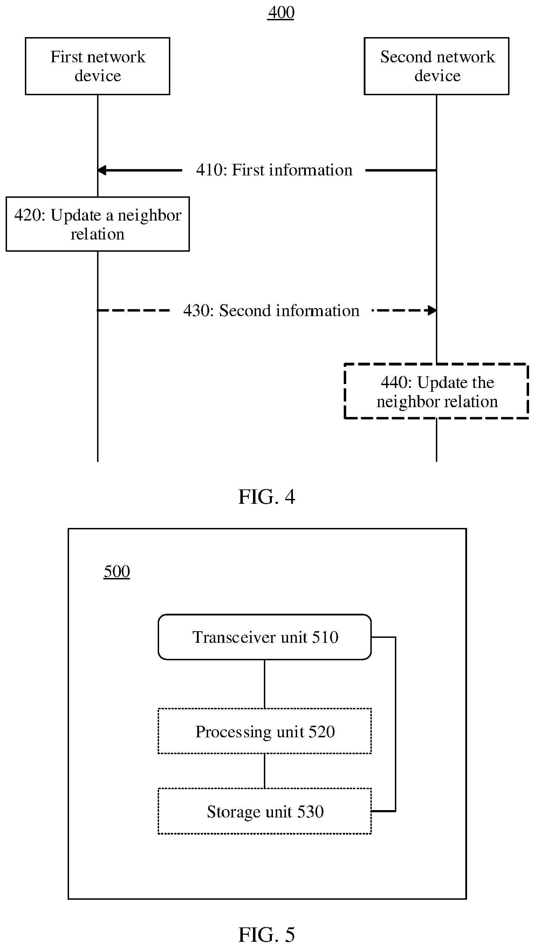

FIG. 4 is a schematic interaction diagram of a communication method 400 according to an embodiment of this application. FIG. 4 shows the communication method by using an example in which a first network device and a second network device are execution bodies of an interaction example. However, the execution bodies of the interaction example are not limited in this application.

It may be understood that steps or procedures implemented by the first network device in FIG. 4 may also be implemented by a chip, a chip system, a processor, or the like that supports the first network device in implementing the method. Steps or procedures implemented by the second network device in FIG. 4 may also be implemented by a chip, a chip system, a processor, or the like that supports the second network device in implementing the method.

As shown in FIG. 4, the method 400 in this embodiment may include the following operations.

Operation 410: The first network device receives first information sent by the second network device, where the first information includes neighboring cell information of the second network device and height information corresponding to the neighboring cell information.

In this case, it may also be understood as that the first information includes a correspondence between neighboring cell information and height information.

The neighboring cell information may be neighboring cell identifier information or neighboring cell list information. The neighboring cell information may alternatively include one or more of a tracking area parameter or a radio access network notification area parameter. The neighboring cell identifier information may include a PCI, and may further include CGI and/or frequency information.

In addition, the first information may alternatively include serving cell information. The serving cell is a cell that belongs to the second network device, or is referred to as a cell covered by the second network device. The serving cell may also be referred to as the cell of the second network device. A cell of another network device adjacent to the serving cell may be referred to as a neighboring cell.

In other words, the second network device may maintain the neighboring cell information based on the height information. For descriptions of the height information, refer to related descriptions in the embodiment in FIG. 3. Details are not described herein again.

It may be understood that the second network device may send the first information to the first network device when establishing an interface with the first network device. Alternatively, the second network device may send the first information to the first network device after updating the neighbor relation.

In a possible manner, each cell has corresponding height information. To be specific, when the neighboring cell information is exchanged between network devices, height information is added for each cell.

Optionally, the height information carried in the neighboring cell information may be a height range. For example, a height 1 shown in Table 7 may be less than or equal to H1, a height 2 may be greater than H1 and less than or equal to H2, and a height 3 may be greater than H2, where H1 and H2 are specific heights, and H2>H1. Optionally, values of H1 and H2 may be determined by the network device.

**Table 7**

| Neighboring cell information | |
| --- | --- |
| Neighboring cell identifier | Height information |
| Neighboring cell 1 | Height 1 |
| Neighboring cell 2 | Height 2 |
| Neighboring cell 3 | Height 3 |

Optionally, the height information may alternatively be a height threshold. Optionally, the height threshold may be fixed, that is, all network devices are set according to a unified threshold. Optionally, the height threshold may alternatively be set by the network device.

In still another possible implementation, when network devices exchange the neighboring cell information, height information is used as a classification basis, and the neighboring cell list information corresponding to each piece of height information is provided.

For example, as shown in Table 8, neighboring cell list 1 corresponds to a neighboring cell list used by a ground user and a low-height user, and neighboring cell lists 2 and 3 correspond to neighboring cell lists used by a high-height user. Each neighboring cell list may correspond to one of height information. A design of the height information is similar to that of in the embodiment shown in FIG. 3. Details are not described herein again.

**Table 8**

| Neighboring cell information | |
| --- | --- |
| Height 1 | Neighboring cell list 1 |
| Height 2 | Neighboring cell list 2 |
| Height 3 | Neighboring cell list 3 |
| Height 4 | Neighboring cell list 4 |

The neighboring cell list information may be configured by a network management system for the network device. The network management system configures the neighboring cell list information for the second network device through network planning, or the second network device updates the neighboring cell list information based on neighboring cell information configured by the network management system and the second message received from the first network device, or the second network device updates the neighboring cell list information based on measurement information that is sent by a terminal device and that carries a cell identifier and a height corresponding to the cell identifier.

It may be understood that after receiving the first information from the second network device, the first network device may store the first information, and may perform a corresponding operation or corresponding processing by using the first information. For example, the first network device may update, based on the first information, a neighbor relation maintained in the first network device. In other words, the method in this embodiment of this application may further include operation 420: The first network device updates the neighbor relation. In this case, all or some neighbor relations updated or maintained by the first network device may also include height information corresponding to the neighboring cell information.

It may be understood that the first network device may also send the neighbor relation to the second network device by using a similar method. In other words, the method may further include an optional operation 430: The first network device sends second information to the second network device, where the second information includes neighboring cell information of the first network device and the height information corresponding to the neighboring cell information, and an implementation method for carrying the height information by the second information is similar to that in the foregoing operation 410. In this embodiment of this application, after receiving the second information from the first network device, the second network device may store the second information, and may perform a corresponding operation or corresponding processing based on the second information. For example, the method may further include an optional operation 440: The second network device updates a neighbor relation of the second network device based on the second information. In this case, all or some neighbor relations updated or maintained by the second network device may also include height information corresponding to the neighboring cell information.

In this embodiment of this application, the first network device and the second network device exchange the neighboring cell information and height information corresponding to the neighboring cell information. Optionally, network devices may alternatively exchange the tracking area parameter, height information corresponding to the tracking area parameter, and/or a radio access network notification area parameter, height information corresponding to the radio access network notification area parameter, and/or measurement configuration information and height information corresponding to the measurement configuration information in a similar manner. In other words, information exchanged in the embodiment shown in FIG. 4 may alternatively be replaced with the tracking area parameter, and/or the radio access network notification area parameter, and/or a measurement configuration parameter and height information corresponding to these parameters. Details are not described herein again in this application.

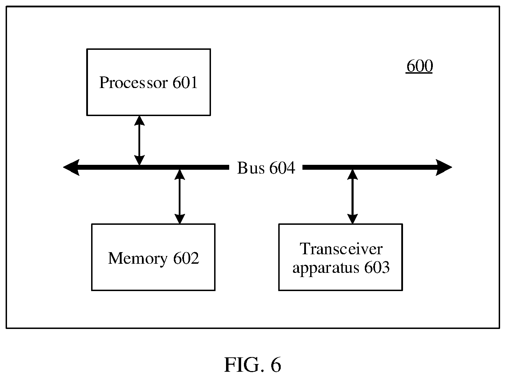

Apparatuses provided in embodiments of this application are described below in detail with reference to FIG. 5 and FIG. 6. It should be understood that descriptions of apparatus embodiments correspond to the descriptions of the method embodiments. Therefore, for content that is not described in detail, refer to the method embodiments. For brevity, some content is not described herein again.

FIG. 5 shows a communication apparatus 500 according to an embodiment of this application. The following describes a structure and function of the communication apparatus 500 with reference to FIG. 5. It should be understood that the communication apparatus 500 may implement any function corresponding to the communication device in the embodiment shown in either of FIG. 3 and FIG. 4. The communication apparatus 500 may be the terminal device mentioned in the foregoing embodiments, or may be a first network device or a second network device. The communication apparatus 500 includes a transceiver unit 510. Optionally, the communication apparatus may further include at least one processing unit 520. Optionally, the communication apparatus may further include a storage unit 530. The storage unit may store data and/or instructions (or may be referred to as code or a program). Both the transceiver unit 510 and the processing unit 520 may perform exchange with the storage unit 530. For example, the processing unit 520 may invoke data or instructions in the storage unit 530, so that the communication apparatus implement a corresponding method.

It should be noted that the processing unit in this embodiment of this application may alternatively be a processing module, a processing circuit, or a processor, and the transceiver unit may alternatively be a transceiver module, a transceiver, a communication interface, an input/output circuit, or the like.

In a possible design, the communication apparatus 500 may correspond to corresponding operations of the terminal device in implementing the foregoing method embodiments. For example, the communication apparatus 500 may be a terminal device, or may be a component (for example, a processor, a chip, or a chip system) configured in the terminal device.

For example, the communication apparatus 500 may correspondingly implement a corresponding operation of the terminal device in the foregoing method 300, and units or modules in the communication apparatus 500 may be configured to perform the method performed by the terminal device in the method 300. In addition, the units in the communication apparatus 500 and the foregoing other operations and/or functions are separately used to implement corresponding procedures in the method 300.

For example, when the communication apparatus correspondingly implements a corresponding operation of the terminal device in the method 300, the processing unit 520 is configured to determine height information, where the height information is related to a first parameter.

Optionally, the transceiver unit 510 is configured to receive configuration information sent by the first network device, where the configuration information includes a correspondence between height information and a first parameter.

Optionally, the processing unit 520 is configured to determine a target parameter based on a current height of the terminal device, where the target parameter includes:
one or more of a tracking area parameter, a radio access network notification area parameter, or a measurement configuration parameter.

Optionally, the transceiver unit 510 is configured to send, to the first network device, measurement information that includes identification information of a cell and a height corresponding to the cell.

Optionally, the transceiver unit 510 is further configured to receive a height threshold from the configuration information, and the processing unit 520 is further configured to:
determine the height information based on the current height of the terminal device and the height threshold.

In another possible design, the communication apparatus 500 may correspondingly implement a corresponding operation of the first network device in the method 300, and the communication apparatus 500 may include a unit configured to perform the method performed by the first network device in the method 300. In addition, the units in the communication apparatus 500 and the foregoing other operations and/or functions are separately used to implement corresponding procedures in the method 300.

When the communication apparatus 500 corresponds to the first network device in the method 300, the processing unit 520 is configured to determine a correspondence between a first parameter and height information, and the transceiver unit 510 is configured to send configuration information to the terminal device. The configuration information includes the first parameter, where the first parameter is related to the height information.

Optionally, the transceiver unit 510 is configured to send the height threshold to the terminal device, where the height threshold is related to the height information. The processing unit 520 is further configured to determine the height information based on the current height of the terminal device and the height threshold.

Optionally, the transceiver unit 510 is configured to receive measurement information from the terminal device, where the measurement information includes identification information of a cell and a height corresponding to the cell. The processing unit 520 is further configured to update a neighbor relation based on the measurement information.

Optionally, the transceiver unit 510 is configured to receive first information from a second terminal device, where the first information includes neighboring cell information of the second network device and height information corresponding to the neighboring cell information. Optionally, the neighboring cell information of the second network device further includes one or more of a tracking area parameter or a radio access network notification area parameter. The processing unit 520 is further configured to update the neighbor relation based on the first information.

Optionally, the transceiver unit 510 is configured to send second information to the second network device, where the second information includes neighboring cell information of the first network device and height information corresponding to the neighboring cell information. Optionally, the neighboring cell information of the first network device further includes one or more of a tracking area parameter or a radio access network notification area parameter.

In another possible design, the communication apparatus 500 may correspondingly implement a corresponding operation of the second network device in the method 400, and the communication apparatus 500 may include a unit configured to perform the method performed by the second network device in the method 400. In addition, the units in the communication apparatus 500 and the foregoing other operations and/or functions are separately used to implement corresponding procedures in the method 400.

When the communication apparatus 500 corresponds to the second network device in the method 400, the transceiver unit 510 is configured to send the neighboring cell information of the second network device and the height information corresponding to the neighboring cell information to the first network device.

Optionally, the transceiver unit 510 is configured to receive the neighboring cell information of the first network device and the height information corresponding to the neighboring cell information from the first network device.

In a possible design, corresponding to the foregoing possible implementations, the processing unit 520 may be a processor. Alternatively, the transceiver unit 510 may be a transceiver apparatus, for example, the transceiver apparatus 603 shown in FIG. 6. Alternatively, the transceiver unit 510 may be a communication interface. A storage unit 640 may be a memory, for example, a memory 602 shown in FIG. 6.

Based on a same technical concept, an embodiment of this application further provides a communication apparatus, configured to implement a function performed by the terminal device, the first network device, or the second network device in the foregoing method embodiments. FIG. 6 is a schematic block diagram of a possible communication apparatus 600 according to an embodiment of this application. The communication apparatus includes at least one processor 601 and a memory 602. Optionally, the communication apparatus may further include a transceiver apparatus 603 and a system bus 604. The bus 604 may be a PCI bus, an EISA bus, or the like. The bus may be classified into an address bus, a data bus, a control bus, or the like. For ease of indication, the bus is indicated by using only one bold line in FIG. 6. However, it does not indicate that there is only one bus or only one type of bus. The transceiver apparatus 603 is used by the communication apparatus 600 to perform communication interaction with another communication device (for example, a radio access network device or a terminal device, which is not limited herein), for example, interaction control signaling and/or service data. The transceiver apparatus 603 may be implemented by using a circuit having a communication transceiver function. The memory 602 is configured to store required program instructions and/or required data. When the at least one processor invokes and executes the program instructions stored in the memory, the communication apparatus is enabled to implement a function of the terminal device in any design of the method 300. Alternatively, when the at least one processor invokes and executes the program instructions stored in the memory, the communication apparatus is enabled to implement a function of the network device (a first network device or a second network device) in any design of the method 300. The at least one processor 601, the memory 602, and the transceiver apparatus 603 are coupled through the system bus 604.

The processor and the transceiver apparatus described in embodiments of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various 1C process technologies, for example, a complementary metal oxide semiconductor (complementary metal oxide semiconductor, CMOS), an n-type metal oxide semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the processor may include one or more processors, for example, include one or more CPUs. When the processor is one CPU, the CPU may be a single-core CPU or a multicore CPU. The transceiver apparatus is configured to: send and receive data and/or a signal, and receive data and/or a signal. The transceiver apparatus may include a transmitter and a receiver. The transmitter is configured to send data and/or a signal, and the receiver is configured to receive data and/or a signal. The transceiver may also be a communication interface. The memory includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory is configured to store a related instruction and/or data.

An embodiment of this application further provides a computer-readable storage medium. The computer-readable storage medium stores computer instructions used to implement the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

For explanations and beneficial effects of related content of any communication apparatus provided above, refer to a corresponding method embodiment provided above. Details are not described herein again.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or other programmable apparatuses. For example, the computer may be a personal computer, a server, a network device, or the like. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

A person skilled in the art may understand that first, second, and various reference numerals in this application are for distinguishing only for ease of description, and are not used to limit the scope of embodiments of this application. A specific value of a numeral (which may also be referred to as an index), a specific value of a quantity, and a location in this application are merely used as an example, but are not unique representation forms, and are not used to limit the scope of embodiments of this application. First, second, and various reference numerals in this application are also for distinguishing only for ease of description, and are not used to limit the scope of embodiments of this application.

In this application, unless otherwise specified, an element represented in a singular form is intended to represent "one or more", but is not intended to represent "one and only one". In this application, unless otherwise specified, "at least one" is intended to represent "one or more", and "a plurality of" is intended to represent "two or more".

In addition, the terms "system" and "network" are usually used interchangeably in this specification. The term "and/or" in this specification describes only an association relationship for describing associated objects and represents that three relationships may exist. For example, A and/or B may represent the following three cases: only A exists, both A and B exist, and only B exists. A may be singular or plural, and B may be singular or plural. The character "/" generally indicates an "or" relationship between associated objects.

The term "at least one of" in this specification indicates all or any combination of listed items. For example, "at least one of A, B, and C" may indicate the following six cases: A exists alone, B exists alone, C exists alone, A and B coexist, B and C coexist, and A, B, and C coexist. A may be singular or plural, B may be singular or plural, and C may be singular or plural.

It may be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

For same or similar parts in embodiments of this application, refer to each other. In embodiments of this application and the implementations/implementation methods/implementation methods in embodiments, unless otherwise specified or a logical conflict occurs, terms and/or descriptions are consistent and may be mutually referenced between different embodiments and between the implementations/implementation methods/implementation methods in embodiments. Technical features in the different embodiments and the implementations/implementation methods/implementation methods in embodiments may be combined to form a new embodiment, implementation, implementation method, or implementation method according to an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A communication method, comprising:

    receiving configuration information sent by a first network device, wherein the configuration information comprises a correspondence between height information and a first parameter; and
    determining a target parameter based on a current height of a terminal device and the configuration information, wherein
    the first parameter comprises one or more of a tracking area parameter, a radio access network notification area parameter, a cell selection or reselection parameter, and
    a measurement configuration parameter.

2. The method according to claim 1, wherein the configuration information further comprises a height threshold, and the determining a target parameter based on a current height of a terminal device and the configuration information comprises: determining current height information based on the current height and the threshold, and determining the target parameter based on the current height information and the configuration information.

3. The method according to claim 1 or 2, wherein the height information comprises a height range, or a height level.

4. The method according to any one of claims 1 to 3, wherein the method further comprises:
   sending measurement information to the first network device, wherein the measurement information comprises identification information of a cell and a height corresponding to the cell.

5. A communication method, comprising:

    determining, by a first network device, a correspondence between a first parameter and height information; and
    sending, by the first network device, configuration information to a terminal device, wherein the configuration information comprises the correspondence between the height information and the first parameter, and
    the first parameter comprises one or more of a tracking area parameter, a radio access network notification area parameter, a cell selection or reselection parameter, and a measurement configuration parameter.

6. The method according to claim 5, wherein the height information comprises a height range, or a height level.

7. The method according to claim 5 or 6, wherein the method further comprises: the configuration information comprises a height threshold, wherein the height threshold is related to the height information.

8. The method according to any one of claims 5 to 7, wherein the method further comprises:
   receiving measurement information from the terminal device, wherein the measurement information comprises identification information of a cell and a height corresponding to the cell.

9. A communication method, comprising:

    maintaining, by a second network device, neighboring cell information based on height information, wherein the neighboring cell information comprises a neighboring cell identifier or a neighboring cell list; and
    sending, by the second network device, first information to a first network device, wherein the first information comprises the neighboring cell information of the second network device and height information corresponding to the neighboring cell information.

10. The method according to claim 9, wherein the neighboring cell information of the second network device further comprises one or more of a tracking area parameter or a radio access network notification area parameter.

11. The method according to claim 9, further comprising: receiving, by the second network device, second information from the first network device, wherein the second information comprises neighboring cell information of the first network device and height information corresponding to the neighboring cell information.

12. The method according to claim 11, wherein the neighboring cell information of the first network device further comprises one or more of a tracking area parameter or a radio access network notification area parameter.

13. A communication method, comprising:

receiving, by a first network device, first information from a second network device, wherein the first information comprises neighboring cell information of the second network device and height information corresponding to the neighboring cell information; and
maintaining, by the first network device, the neighboring cell information based on the first information, wherein the neighboring cell information comprises a neighboring cell identifier or a neighboring cell list.

14. The method according to claim 13, further comprising: sending second information to the second network device, wherein the second information comprises neighboring cell information of the first network device and height information corresponding to the neighboring cell information.

15. The method according to claim 13, wherein the neighboring cell information of the second network device further comprises one or more of a tracking area parameter or a radio access network notification area parameter.

16. The method according to claim 14, wherein the neighboring cell information of the first network device further comprises one or more of a tracking area parameter or a radio access network notification area parameter.

17. A communication apparatus, wherein the apparatus is configured to perform the method according to any one of claims 1 to 4.

18. A communication apparatus, wherein the apparatus is configured to perform the method according to any one of claims 5 to 8, and/or any one of claims 9 to 12, and/or any one of claims 13 to 16.

19. A computer-readable storage medium, storing a computer program or instructions, wherein when the computer program or the instructions are executed, a computer is enabled to perform the method according to any one of claims 1 to 16.

20. A computer program product, wherein the computer program product comprises computer program code, and when the computer program code is run on a computer, the computer is enabled to implement the method according to any one of claims 1 to 16.

21. A chip, comprising a processor, wherein the processor is coupled to a memory, the memory is configured to store a program or instructions, and when the program or the instructions are executed by the processor, the chip is enabled to perform the method according to any one of claims 1 to 16.

22. A communication system, wherein the system comprises:
the communication apparatus according to claim 17 and/or the communication apparatus according to claim 18.

<u>100</u>

Network device 110

Network device 120

Terminal device 130

FIG. 1

FIG. 1A

Core network

RAN

gNB

CU

DU   DU

gNB

CU

DU   DU

FIG. 2

300

First network
device

Terminal
device

310: Measurement information

320: Determine
height information

330: Configuration information

340: Determine a
target parameter

FIG. 3

400

First network device

Second network device

410: First information

420: Update a neighbor relation

430: Second information

440: Update the neighbor relation

FIG. 4

500

Transceiver unit 510

Processing unit 520

Storage unit 530

FIG. 5

FIG. 6

## INTERNATIONAL SEARCH REPORT

| | International application No. |
|---|---|
| | **PCT/CN2019/130552** |

**A.    CLASSIFICATION OF SUBJECT MATTER**

H04W 48/04(2009.01)i;  H04W 48/20(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, 3GPP: 不同, 高度, 小区, 重选/选择, 跟踪区域参数 /无线接入网络通知区域参数 /TAI /TAC/RNAC/配置参数, 载人机/无人机/无人驾驶/UAV/空中/飞行, 目标, 当前, different, height, cell? , reselect+/select +, parameter, unmanned aerial vehicle/fly, goal, current

**C.    DOCUMENTS CONSIDERED TO BE RELEVANT**

| Category* | Citation of document, with indication, where appropriate, of the relevant passages | Relevant to claim No. |
|---|---|---|
| X | CN 110139284 A (NTT DOCOMO, INC.) 16 August 2019 (2019-08-16) description, paragraphs [0023]-[0062] | 1-22 |
| X | CN 108064453 A (CLOUDMINDS (SHENZHEN) ROBOTICS SYSTEMS CO., LTD.) 22 May 2018 (2018-05-22) claims 1-7 | 9-16, 18-22 |
| A | CN 109218344 A (HUAWEI TECHNOLOGIES CO., LTD.) 15 January 2019 (2019-01-15) entire document | 1-22 |
| A | CN 109819500 A (RESEARCH INSTITUTE OF CHINA MOBILE COMMUNICATIONS CORPORATION et al.) 28 May 2019 (2019-05-28) entire document | 1-22 |
| A | US 10389432 B2 (AT&T INTELLECTUAL PROPERTY I, L.P.) 20 August 2019 (2019-08-20) entire document | 1-22 |
| A | US 2019045406 A1 (INTEL IP CORPORATION) 07 February 2019 (2019-02-07) entire document | 1-22 |

☐ Further documents are listed in the continuation of Box C.      ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **18 August 2020** | **09 September 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

International application No.

**PCT/CN2019/130552**

| Patent document cited in search report | | | Publication date (day/month/year) | Patent family member(s) | | | Publication date (day/month/year) |
|---|---|---|---|---|---|---|---|
| CN | 110139284 | A | 16 August 2019 | WO | 2019154061 | A1 | 15 August 2019 |
| CN | 108064453 | A | 22 May 2018 | EP | 3576456 | A1 | 04 December 2019 |
| | | | | US | 2019387439 | A1 | 19 December 2019 |
| | | | | EP | 3576456 | A4 | 29 January 2020 |
| | | | | WO | 2019061113 | A1 | 04 April 2019 |
| CN | 109218344 | A | 15 January 2019 | EP | 3637732 | A1 | 15 April 2020 |
| | | | | WO | 2019001573 | A1 | 03 January 2019 |
| | | | | KR | 20200019737 | A | 24 February 2020 |
| | | | | EP | 3637732 | A4 | 15 April 2020 |
| | | | | US | 2020137646 | A1 | 30 April 2020 |
| CN | 109819500 | A | 28 May 2019 | None | | | |
| US | 10389432 | B2 | 20 August 2019 | US | 2019379445 | A1 | 12 December 2019 |
| | | | | US | 2018375568 | A1 | 27 December 2018 |
| US | 2019045406 | A1 | 07 February 2019 | None | | | |